# EUROPEAN PATENT SPECIFICATION

(11) **EP 1 351 436 B1**
(45) Date of publication and mention of the grant of the patent: **31.05.2006**
(21) Application number: 02007032.2
(22) Date of filing: 27.03.2002
(51) Int. Cl.: H04L 12/18, H04M 3/56, H04L 12/66, H04L 29/06

(54) **Dynamic web conference monitoring through a streaming mechanism**
Dynamische Netzwerkkonferenzüberwachung durch einen Datenstrommechanismus
Surveillance dynamique d'une conférence web par un méchanisme de transmission en continu

(43) Date of publication of application: 08.10.2003
(73) Proprietor: SIEMENS AKTIENGESELLSCHAFT, 80333 München (DE)
(72) Inventor: Richomme, Morgan, 22300 Lannion (FR)

(56) References cited:
- US-B1- 6 181 691
- CINDY SESNICK: "Version 2.0 User Guide" MP-CONTROLLER, [Online] 1 June 2000 (2000-06-01), pages 1-15, XP002208477 Nashua, NH, USA Retrieved from the Internet: <URL:http://support.cuseeme.com/manuals/mp -controller20.pdf> [retrieved on 2002-07-31]
- TOYE G ET AL: "SHARE: a methodology and environment for collaborative production development" ENABLING TECHNOLOGIES: INFRASTRUCTURE FOR COLLABORATIVE ENTERPRISES, 1993. PROCEEDINGS., SECOND WORKSHOP ON MORGANTOWN, WV, USA 20-22 APRIL 1993, LOS ALAMITOS, CA, USA,IEEE COMPUT. SOC, US, 20 April 1993 (1993-04-20), pages 33-47, XP010032779 ISBN: 0-8186-4082-0
- ROUSSEAU F ET AL: "Streaming support in an advanced multimedia infrastructure for the WWW" COMPUTERS AND COMMUNICATIONS, 1999. PROCEEDINGS. IEEE INTERNATIONAL SYMPOSIUM ON RED SEA, EGYPT 6-8 JULY 1999, LOS ALAMITOS, CA, USA,IEEE COMPUT. SOC, US, 6 July 1999 (1999-07-06), pages 173-179, XP010344158 ISBN: 0-7695-0250-4

## Description

The invention relates to a method for monitoring a voice-based conference.

Advances in crosscutting technologies have brought about interoperation and convergence of data and voice networks. In particular, it is possible to enhance voice services, e.g. PSTN (public switched telephone network) telephony, with new features that entail the transport of service-related data over data networks. The transport of voice can be effected either over separate voice networks or over the same data networks. In the latter case new technologies such as VoIP (voice over IP) are usually employed that allow for transport of voice over packet-switched networks, e.g. IP (Internet Protocol) networks.

There is a number of voice services that lend themselves to enhancement with features that rely on transmission over data networks. In particular, voice services can be augmented by visualisation of service related data or information. Web technologies provide powerful tools for enhancing services with visualised data. For example, data such as images, text, tables etc. can be formatted for display on a graphical user interface (GUI) of a Web terminal device.

In addition, advances in developing new architectures for distributed systems and modern runtime environments, e.g. Java-based runtime environments or Microsoft .NET, open the path to enhancing complex voice services, such as voice-based conferences, with data-oriented features. These new features often require the transmitted data to be efficiently processed, preferably in real time.

Cindy Sesnik: "Version 2.0 User Guide" MP-Controller, 1 June 2000, XP002208477 Nashua, NH, USA provides a user guide for MP-Controller, a software program to be used in conjunction with videoconferencing software called MeetingPoint. The above document introduces interfaces and features for monitoring and controlling web-based videoconferences.

Toye G. et al: "Share: a methodology and environment for collaborative production development" in Enabling Technologies: Infrastructure for collaborative enterprises, 1993. Proceedings., second workshop on Morgantown, WV, USA 20-22 April 1993, Los Alamitos, CA, USA, IEEE Comput. Soc, US, 20 April 1993, pages 33-47, XP010032779, ISBN: 0-8186-4082-0 introduces "Share", a prototype environment providing shared multiple access for joint development of products.

The present invention aims to provide an efficient method for monitoring voice-based conferences, using the method of claim 1.

Within the present method for monitoring a voice-based conference connections are set up for notification of a plurality of participants. A conference agenda is maintained on a Web terminal device. The voice-based conference is monitored based on the conference agenda. Monitoring information is transmitted to the plurality of participants during the voice-based conference.

Participants in the voice-based conference may use a PSTN terminal device, a voice-enabled Internet terminal device or a VoIP telephone. At least part of the conference participants are equipped with Web terminal devices, which may be voice-enabled and also used for voice exchange, to which monitoring information is transmitted. It is also possible that participants use separate terminal devices for the exchange of voice and monitoring information.

This monitoring information can be visualised on the displays of the Web terminal devices. Thus, the exchange of voice between the participants is enhanced through an exchange of data in the form of transmitted monitoring information. This monitoring information may comprise agenda information relating to a dynamically updated or amended agenda for the conference, action items specified during the conference, or the time spent on the current action item. The terminal device where the agenda is maintained may be operated by a conference controller.

The present method provides features for monitoring and controlling voice-based conferences. By introducing a dynamically updated agenda a powerful management tool for the conference controller is provided which helps him/her to control the course of the conference.

The transmission of monitoring information helps the participants keeping track as the conference proceeds. A conference report may be generated at the end of the voice-based conference which summarises the major points. This report may be transmitted to the participants' Web terminal devices before closing the conference-related connections. Participant who did not have access to a Web terminal device during the conference and who participated via PSTN phone may be sent the report via surface mail or email.

The monitored information should be preferably transmitted in real time, in particular information relating to the time spent on individual action items or on the total time spent. Real-time transmission can be effectively realised via streaming mechanisms. A conference server for transmitting monitored information with the help of a streaming technique is used, such as HTTP (hypertext transfer protocol) streaming. The Web terminal device of the conference controller and the Web terminal devices of the participants can figure as clients that connect to the conference server. The connections may be set up by invoking a server-side Java applet. The monitoring information is first transmitted to the conference server. At the conference server the monitoring information is adjusted so that this information can be sent in the form of a programming language code which is executable by the participants' Web terminal devices. For example, the monitoring information may be encoded in JavaScript, HTTP, or XML (extended markup language) as many a browser can execute JavaScript code or XML code. Possibly, the processing of the monitoring information varies for different participating Web terminal devices. By allowing for different alternatives for processing information one can account for the respective encoding requirements of the software implemented in the individual Web terminal devices. The programming language codes are executed by the browsers of the participants' Web terminal devices, whereby the monitoring information is displayed.

Below the invention is described by way of example and with reference to figures.
Fig. 1 shows a scenario of a voice-based conference with provisions for sending monitoring information to participants
Fig. 2 shows a GUI for manipulating a conference agenda
Fig. 3 shows an exchange of messages according to the present method

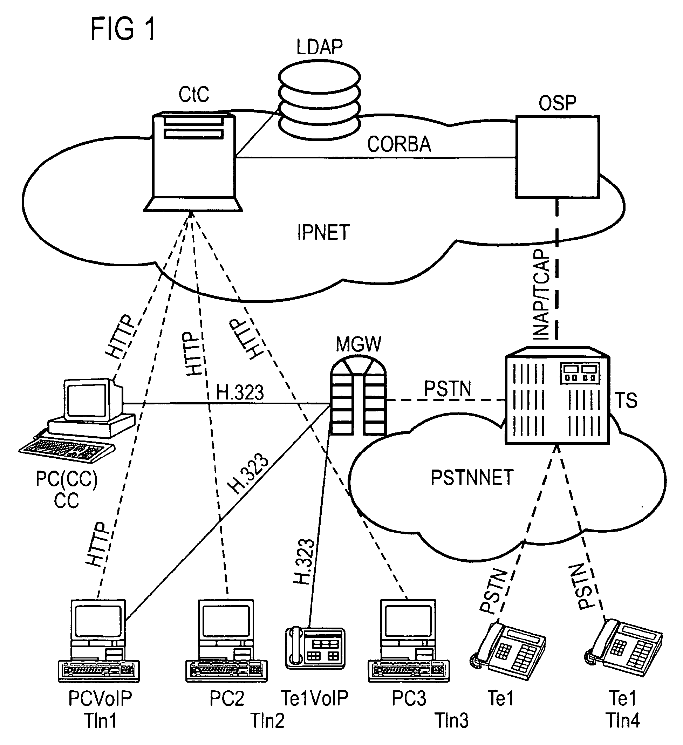

Figure 1 shows an embodiment of the invention applied to a scenario where a voice-based conference is invoked and controlled via a Web terminal device PC(CC), such as a personal computer connected to the Internet IPNET. The controlling of the voice-based conference includes the steps of preparing and initiating a conference, adding a participant Tln1, ..., Tln4 to an already established conference, and closing the conference. The Web terminal device PC(CC) is voice-enabled, i.e. it provides the functionality of a VoIP terminal device, so that the conference controller can participate in the voice-based conference via his/her Web terminal device PC(CC). By way of example four participants Tln1, .., Tln4 are shown on figure 1, who differ with respect to the terminal devices used during the conference. Within the conference terminal devices are used on the one hand for transmitting voice, on the other hand for receiving monitoring information. The employed terminal devices are:
Participant Tln1: A voice-enabled Web terminal device PCVoIP is used for both purposes. Voice is transmitted via the H.323 protocol, data via the HTTP protocol.
Participant Tln2: Two terminal devices are employed, a Web terminal device PC for receiving data via HTTP and a VoIP telephone TelVoIP for voice transmission via H.323.
Participant Tln3: A Web terminal device PC and a PSTN telephone are used.
Participant Tln4: A PSTN telephone is used. Participant Tln4 does not receive monitoring information.

To initiate the telephone conference the conference controller CC sets up an HTTP connection to the conference server CtC via the Internet IPNET. Authentication information such as details of the initiator, i.e. the conference controller CC, and the participants Tln1, Tln2, Tln3, and Tln4 as well as an access PIN (personal identification number) may be provided. The controller CC also specifies the use of a VoIP (voice over IP) connection mediated through the H.323 or the SIP (session initiation protocol) protocol. Optionally, he/she may use a PSTN connection if a PSTN telephone is available. For retrieval and storage of authentication information and authorisation information a LDAP server LDAP is placed in the vicinity of the Web conference server CtC. The Web conference server CtC is linked to an open service platform OSP by means of CORBA (Common Object Request Broker Architecture), which provides an environment for distributed applications on top of the TCP/IP (transmission control protocol over internet protocol) protocol stack. APIs (Application programming interfaces) of the open service platform OSP allow for the provision of additional services and the implementation of additional service features. In addition, the open service platform OPS receives signalling messages for call control of the telephone conference from a telephone switch TS, which are relayed to the Web conference server CtC. Messages between the open service platform OSP and the telephone switch TS are exchanged via the protocols INAP (intelligent network user part) and TCAP (transaction capability application part). These two protocols are commonly used for communication between an SSP (service switching point) and an SCP (service control point) in an IN (intelligent network) network architecture with SS7 (signalling system 7) signalling. The telephone switch TS, e.g. an ISDN switch, assumes switching functions for the PSTN connections of the telephone conference. PSTN connection are also relayed to a media gateway MGW to allow for participation of the participants Tln1 and Tln2 and the conference controller CC via VoIP.

An agenda for the conference is maintained on the conference controller's Web terminal PC(CC). This agenda may be modified, amended or updated during the conference. The participants Tln1, Tln2, and Tln3 are notified about changes of the agenda in real time. For this purpose HTTP connections are established between the Web terminal devices of the conference controller PC(CC) and the participants Tln(1), Tln(2), and Tln(3) and the conference server CtC when setting up the conference. In the case of a change of the agenda monitoring information are transmitted from the conference controller's Web terminal to the conference server CtC, adjusted for representation through browser software and relayed to the participants Tln1, Tln2, and Tln3. In the same way the time spent on the individual agenda items may be monitored by the conference controller and displayed to the participants Tln1, Tln2, and Tln3.

In the preferred embodiment the real-time notification of the conference participant Tln1, Tln2, and Tln3 through the transmission of monitoring information is realised by means of a combination of server-side Java servlets and dynamic HTTP. Within this scheme the conference server figures as a Web server and the participants' Web terminal devices PCVoIP and PC figure as Web clients. To start the notification mechanism a server-side servlet is invoked through an HTML request by the clients PCVoIP and PC. By invoking the Java servlet the client PC(CC) subscribes to receive notification messages transmitted from the telephone switch TS.

An HTTP connection is set up for streaming in messages from the server CtC to the clients PCVoIP, PC2, and PC3. In contrast to the original client-server communication, where the HTTP connection is closed after fetching an HTTP page, the connection remains open while fresh notification messages are pushed to the clients PCVoIP, PC2, and PC3. Through the subscription by a client a format is specified for notification messages to be sent by the server CtC to the respective client. This format is chosen to be a computer code that can be executed by the client's browser, such as JavaScript, XML, or Java-serialised objects. The latter format can be used for browsers that make use of client-side Java classes. It is possible to specify different formats for different clients for the same conference. Via the subscription request by the client the transmission protocol for the streaming is specified, too. Preferably, this protocol is chosen to be HTTP, but other choices such as TCP (transmission control protocol), UDP (user datagram protocol), RMI (remote message invocation) etc. are also possible. The monitoring information from the controller's Web terminal device that is received by the server CtC is formatted or adjusted for transmission to the clients PCVoIP, PC2, and PC3. The corresponding notification messages are dispatched by means of a Java applet, which is sometimes called pushlet, that pushes or sends the notification messages to the clients' browsers. The pushing or sending of computer code that is executed by a client's browser is a mechanism originally applied in the framework of dynamic HTML (DHTML). Traditionally, a page could be altered only by reloading a new page from the server. DHTML allows full control of an HTML document within a browser after the page has been loaded. From a programmer's point of view the entire document in the Web browser - frames, images, paragraphs, tables etc. - is represented as a hierarchical object model, the DOM (document object model). JavaScript code or any other computer code executable by the browser is used to dynamically manipulate the elements of the DOM and thereby change the content or appearance of the document. The official standards body for DHTML-related specifications is the World Wide Web Consortium (W3C). The client's GUI (graphical user interface) is dynamically updated with new notification messages streamed in from the server.

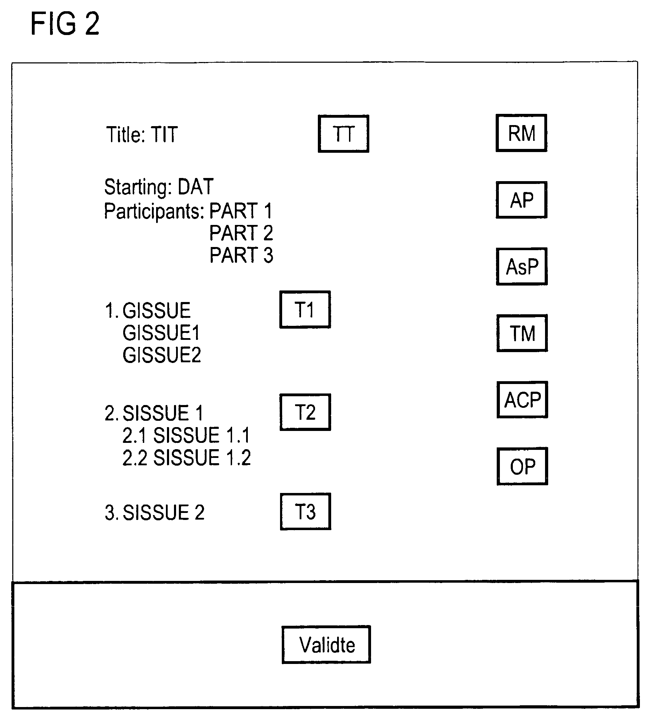

On figure 2 an example of how a conference agenda may be manipulated by means of a GUI. Following information is displayed on the GUI:
- The title TIT of the conference
- The date DAT of the conference
- The participants PART1, PART2, and PART3 in the conference
- The conference agenda comprising the general agenda points GISSUE1 and GISSUE2 and the specific agenda points SISSUE1 (with sub-points SISSUE1.1 and SISSUE1.2) and SISSUE2.

The total time TT allocated for the conference and the time slots T1, T2, and T3 for the individual agenda points are displayed. Time slots for sub-points may be added, too. There are following buttons provided for changing details of the agenda or for monitoring the conference:
- RM: for removing agenda items
- AP: for adding agenda points
- AsP: for adding sub-points
- TM: to activate a timer
- ACP: to take down an action point
- OP: to take down an open point

An additional button Validte is provided to validate changes made on the agenda. The view of the agenda is activated by clicking on a button displayed on the controller's terminal device. Changes of the agenda, new action points, and the time spent on the current agenda point may be displayed on participants' terminal devices via the HTTP streaming method described above.

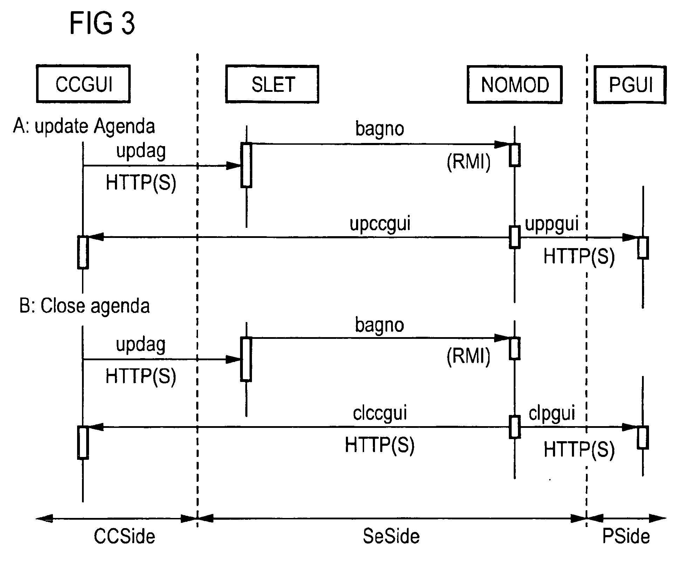

On figure 3 an exchange of messages according to the invention are shown. The exchange of messages in the upper part A of the figure relates to an update of the agenda. The lower part B of the figure refers to a message exchange at the end of a conference, where the agenda view on the GUI of the participants and the conference controller is closed.

Messages are exchanged between four different processes or objects. For updating the agenda a request updag (updag: stands for "update agenda") is transmitted from the conference controller's GUI to a servlet SLET on the conference server. For the client-server communication the HTTP protocol enhanced with security features HTTP(S) is used. The request updag is decoded by the servlet. Based on the information extracted from the request by the servlet an http notification message bagno is generated and transmitted via RMI (remote message invocation) to a notification module NOMOD situated on the conference server. The RMI method allows for communication of objects or processes located on different platforms. Thus, multiple-platform realisations for the conference servers are viable. Scalability is assured. For a standalone solution of a conference server on a single platform it is more efficient to use inter-process communication than RMI. The notification module NONMOD assumes the distribution of the agenda updates uppgui (uppgui: stands for "update participants' GUI) and upccgui (upccgui: stands for "update conference controller's GUI) to the participants and the conference controller, respectively. The notification messages are transmitted over an open http connection via http streaming. The sequence of messages is the same at the end of the conference except for the transmission of the notification messages clpgui to the participants and clccgui to the conference controller which signal to the respective GUIs the end of the conference and trigger the closing of the connections for http streaming. Essentially, the exchange of messages is performed via server-client communication, where the processes CCGUI and PGUI reside on the clients CCside (CCside: stands for conference controller's side) and Pside (Pside: stands for participants' sides) and the processes SLET and NONMOD reside on the server SeSide (SeSide: stands for server side).

The conference controller CCside may or may not participate in the voice-based conference. In the first case he disposed of a voice-enabled terminal device, possible identical with his/her Web terminal device. The conference controller's GUI of his/her Web terminal device may be updated in the same way and simultaneously with the update of the participants' GUIs. If the update of the controller's GUI is treated on the same footing as the update of the participants' GUIs and if the conference controller participates in the voice-based conference the term "participants" has to be interpreted to include the conference controller.

## Claims

1. A method for monitoring a voice-based conference, comprising the steps of
a) establishing connections to participants' Web terminal devices (PCVoIP, PC2, PC3) for notification of a plurality of participants in the voice-based conference,
b) maintaining a conference agenda on a Web terminal device (PC(CC)),
c) monitoring the voice-based conference based on the conference agenda; and
d) transmitting monitoring information (uppgui, clpgui) to the plurality of participants during the voice-based conference,
**characterised by**
following additional steps
e) opening a connection between the Web terminal device (PC(CC)) and a conference server (CtC),
f) establishing connections between the conference server (CtC) and the participants' Web terminal devices (PCVoIP, PC2, PC3),
g) encoding the monitoring information at the conference server (CtC) for sending the monitoring information in the form of a programming language code that is executable by the participants' Web terminal devices (PCVoIP, PC2, PC3),
h) using a streaming mechanism for transmission of the monitoring information from the conference server (CtC) to the participants' Web terminal devices (PCVoIP, PC2, PC3); and
i) executing the programming language code by browsers of the participants' Web terminal devices (PCVoIP, PC2, PC3), whereby the monitoring information is displayed.

2. The method according to claim 1, further comprising:
a) maintaining at least one of the connections between the conference server (CtC) and the participants' Web terminal device (PCVoIP, PC2, PC3) throughout the voice-based conference; and
b) sending regularly messages from a participant's Web terminal device to the conference server (CtC) to enquire whether the connection still needs to be kept open.

3. The method according to claim 1 or 2, further comprising:
sending monitoring information in real time.

4. The method according to one of the claims 1 to 3, further comprising:
opening the connection between the Conference server (CtC) and one of the participants' Web terminal devices (PCVoIP, PC2, PC3) by invoking a server-side Java servlet.

5. The method according to one of the claims 1 to 4, further comprising:
using the HTTP (hypertext transfer protocol) protocol for at least one of the connections between the conference server (CtC) and a participant's Web terminal device (PCVoIP, PC2, PC3).

6. The method according to one of the claims 1 to 5, further comprising:
updating the agenda during the voice-based conference; and
transmitting the updated agenda as monitoring information (uppgui) to at least one of the participants' Web terminal devices (PCVoIP, PC2, PC3).

7. The method according to one of the claims 1 to 6, further comprising:
monitoring time spent on agenda items during the voice-based conference; and
transmitting monitoring information related to the time spent on agenda items to at least one of the participants' Web terminal devices (PCVoIP, PC2, PC3).

8. The method according to one of the claims 1 to 7, further comprising:
generating action items in the course of the voice-based conference; and
transmitting monitoring information related to the generated action items to at least one of the participants' Web terminal devices (PCVoIP, PC2, PC3).

9. The method according to one of the claims 1 to 8, further comprising:
generating a conference report at the end of the voice-based conference; and
transmitting the conference report as monitoring information to at least one of the participants' Web terminal devices (PCVoIP, PC2, PC3).

## Patentansprüche

1. Verfahren zur Überwachung einer sprachbasierten Konferenz, welches die folgenden Schritte umfasst:
a) Herstellen von Verbindungen zu den Netzwerkendgeräten der Konferenzteilnehmer (PCVoIP, PC2, PC3) zwecks Benachrichtigung einer Mehrzahl von Teilnehmern an der sprachbasierten Konferenz,
b) Pflegen einer Tagesordnung für die Konferenz auf einem Netzwerkendgerät (PC(CC)),
c) Überwachen der sprachbasierten Konferenz auf der Grundlage der Tagesordnung der Konferenz; und
d) Übermitteln der Überwachungsinformationen (uppgui, clpgui) an die Mehrzahl von Konferenzteilnehmern während der sprachbasierten Konferenz,
**gekennzeichnet durch**
die nachstehenden zusätzlichen Schritte
e) Herstellen einer Verbindung zwischen dem Netzwerkendgerät (PC(CC)) und einem Konferenz-Server (CtC),
f) Herstellen von Verbindungen zwischen dem Konferenz-Server (CtC) und den Netzwerkendgeräten der Konferenzteilnehmer (PCVoIP, PC2, PC3),
g) Codieren der Überwachungsinformationen auf dem Konferenz-Server (CtC) für die Übertragung der Überwachungsinformationen in Form eines Codes in einer Programmiersprache, welcher von den Netzwerkendgeräten der Konferenzteilnehmer (PCVoIP, PC2, PC3) ausgeführt werden kann,
h) Verwenden eines Datenstrommechanismus für das Übertragen der Überwachungsinformationen von dem Konferenz-Server (CtC) an die Netzwerkendgeräte der Konferenzteilnehmer (PCVoIP, PC2, PC3); und
i) Ausführen des Programmiersprachen-Codes **durch** die Browser der Netzwerkendgeräte der Konferenzteilnehmer (PCVoIP, PC2, PC3), wodurch die Überwachungsinformationen angezeigt werden.

2. Verfahren gemäß Anspruch 1, welches ferner Folgendes umfasst:
a) Aufrechterhalten mindestens einer der Verbindungen zwischen dem Konferenz-Server (CtC) und den Netzwerkendgeräten der Konferenzteilnehmer (PCVoIP, PC2, PC3) für die gesamte Dauer der sprachbasierten Konferenz; und
b) Senden regelmäßiger Nachrichten von dem Netzwerkendgerät eines Konferenzteilnehmers an den Konferenz-Server (CtC), um anzufragen, ob die betreffende Verbindung noch offen gehalten werden muss.

3. Verfahren gemäß Anspruch 1 oder 2, welches ferner Folgendes umfasst:
Senden von Überwachungsinformationen in Echtzeit.

4. Verfahren gemäß einem der Ansprüche 1 bis 3, welches Folgendes umfasst:
Herstellen einer Verbindung zwischen dem Konferenz-Server (CtC) und einem der Netzwerkendgeräte der Konferenzteilnehmer (PCVoIP, PC2, PC3), indem ein serverseitiges Java-Servlet aufgerufen wird.

5. Verfahren gemäß einem der Ansprüche 1 bis 4, welches ferner Folgendes umfasst:
Verwenden des HTTP-Protokolls (Hypertext Transfer Protocol) für mindestens eine der Verbindungen zwischen dem Konferenz-Server (CtC) und dem Netzwerkendgerät eines Konferenzteilnehmers (PCVoIP, PC2, PC3).

6. Verfahren gemäß einem der Ansprüche 1 bis 5, welches ferner Folgendes umfasst:
Aktualisieren der Tagesordnung im Verlauf der sprachbasierten Konferenz; und
Übermitteln der aktualisierten Tagesordnung als Überwachungsdaten (uppgui) an mindestens eines der Netzwerkendgeräte der Konferenzteilnehmer (PCVoIP, PC2, PC3).

7. Verfahren gemäß einem der Ansprüche 1 bis 6, welches ferner Folgendes umfasst:
Überwachen der Zeit, die für Tagesordnungspunkte aufgewendet wird, während der sprachbasierten Konferenz; und
Übertragen von Überwachungsinformationen in Bezug auf die Zeit, die für Tagesordnungspunkte aufgewendet wird, an mindestens eines der Netzwerkendgeräte der Konferenzteilnehmer (PCVoIP, PC2, PC3).

8. Verfahren gemäß einem der Ansprüche 1 bis 7, welches ferner Folgendes umfasst:
Generieren von Aktionspunkten im Verlauf der sprachbasierten Konferenz; und
Übertragen von Überwachungsinformationen in Bezug auf die generierten Aktionspunkte an mindestens eines der Netzwerkendgeräte der Konferenzteilnehmer (PCVoIP, PC2, PC3) .

9. Verfahren gemäß einem der Ansprüche 1 bis 8, welches ferner Folgendes umfasst:
Erzeugen eines Berichts über die Konferenz am Ende der sprachbasierten Konferenz; und
Übertragen des Berichts über die Konferenz als Überwachungsinformationen an mindestens eines der Netzwerkendgeräte der Konferenzteilnehmer (PCVoIP, PC2, PC3).

## Revendications

1. Procédé de surveillance d'une conférence basée sur la voix, comprenant les étapes suivantes :
a) établissement de connexions vers les terminaux Web (PCVoIP, PC2, PC3) de participants pour la notification d'une pluralité de participants à la conférence basée sur la voix,
b) maintien à jour d'un agenda de conférence sur un terminal Web (PC(CC)),
c) surveillance de la conférence basée sur la voix en se basant sur l'agenda de conférence et
d) transmission d'informations de surveillance (uppgui, clpgui) à la pluralité de participants pendant la conférence basée sur la voix,
**caractérisé par**
les étapes supplémentaires suivantes
e) ouverture d'une connexion entre le terminal Web (PC(CC)) et un serveur de conférence (CtC),
f) établissement de connexions entre le serveur de conférence (CtC) et les terminaux Web (PCVoIP, PC2, PC3) des participants,
g) codage des informations de surveillance au niveau du serveur de conférence (CtC) pour envoyer les informations de surveillance sous la forme d'un code de langage de programmation exécutable par les terminaux Web (PCVoIP, PC2, PC3) des participants,
h) utilisation d'un mécanisme de transmission en continu pour la transmission des informations de surveillance du serveur de conférence (CtC) vers les terminaux Web (PCVoIP, PC2, PC3) des participants et
i) exécution du code de langage de programmation par les navigateurs des terminaux Web (PCVoIP, PC2, PC3) des participants, les informations de surveillance étant affichées.

2. Procédé selon la revendication 1, comprenant, en outre :
a) le maintien d'au moins une des connexions entre le serveur de conférence (CtC) et les terminaux Web (PCVoIP, PC2, PC3) des participants pendant toute la durée de la conférence basée sur la voix et
b) l'envoi régulier de messages d'un terminal Web d'un participant au serveur de conférence (CtC) pour demander si la connexion doit encore rester ouverte.

3. Procédé selon la revendication 1 ou 2, comprenant, en outre:
l'envoi d'informations de surveillance en temps réel.

4. Procédé selon l'une des revendications 1 à 3, comprenant, en outre :
l'ouverture de la connexion entre le serveur de conférence (CtC) et un des terminaux Web (PCVoIP, PC2, PC3) des participants en invoquant une servlet Java côté serveur.

5. Procédé selon l'une des revendications 1 à 4, comprenant, en outre:
l'utilisation du protocole HTTP (*hypertext transfer protocol*) pour au moins une des connexions entre le serveur de conférence (CtC) et un terminal Web (PCVoIP, PC2, PC3) d'un participant.

6. Procédé selon l'une des revendications 1 à 5, comprenant, en outre:
une mise à jour de l'agenda pendant la conférence basée sur la voix et
une transmission de l'agenda mis à jour, en tant qu'informations de surveillance (uppgui), vers au moins un des terminaux Web (PCVoIP, PC2, PC3) des participants.

7. Procédé selon l'une des revendications 1 à 6, comprenant, en outre:
une surveillance du temps passé sur les thèmes de l'agenda pendant la conférence basée sur la voix et
une transmission d'informations de surveillance concernant le temps passé sur les thèmes de l'agenda vers au moins un des terminaux Web (PCVoIP, PC2, PC3) des participants.

8. Procédé selon l'une des revendications 1 à 7, comprenant, en outre:
la génération de thèmes d'action au cours de la conférence basée sur la voix et
une transmission d'informations de surveillance concernant les thèmes d'action générés vers au moins un des terminaux Web (PCVoIP, PC2, PC3) des participants.

9. Procédé selon l'une des revendications 1 à 8, comprenant, en outre:
la génération d'un compte-rendu de conférence à la fin de la conférence basée sur la voix et
une transmission du compte-rendu de conférence, en tant qu'informations de surveillance, vers au moins un des terminaux Web (PCVoIP, PC2, PC3) des participants.
